# EUROPÄISCHE PATENTSCHRIFT

(11) **EP 1 467 900 B1**
(45) Veröffentlichungstag und Bekanntmachung des Hinweises auf die Patenterteilung: **26.10.2005**
(21) Anmeldenummer: 03775378.7
(22) Anmeldetag: 20.11.2003
(51) Int. Cl.: B60S 1/18, E05F 15/00

(54) **ANTRIEBSANORDNUNG FÜR EINEN SCHWENKBAREN FAHRZEUGSCHEIBENWISCHER**
DRIVE SYSTEM FOR A PIVOTABLE WINDSCREEN WIPER
SYSTEME D'ENTRAINEMENT POUR UN ESSUIE-GLACE DE VEHICULE PIVOTANT

(30) Priorität: 10.01.2003 DE 10300837
(43) Veröffentlichungstag der Anmeldung: 20.10.2004
(73) Patentinhaber: CTS Fahrzeug-Dachsysteme GmbH, 74321 Bietigheim-Bissingen (DE)
(72) Erfinder: WAGNER, Tobias, 21149 Hamburg (DE)
(74) Vertreter: Wittner, Walter
(86) Internationale Anmeldenummer: PCT/EP2003/012999
(87) Internationale Veröffentlichungsnummer: WO 2004/062973

(56) Entgegenhaltungen:
- US-A- 2 392 230
- US-A- 3 505 702
- US-A- 5 969 431

## Beschreibung

Die Erfindung betrifft eine Antriebsanordnung für einen schwenkbaren Fahrzeugscheibenwischer gemäß dem Oberbegriff des Anspruches 1.

Bei einer aus dem Buch: Wie funktioniert das? Das Auto, Bibliografisches Institut Mannheim/Zürich, 1968, Seite 248 bekannten Antriebsanordnung für schwenkbare Fahrzeugscheibenwischer ist dem als Antriebsquelle vorgesehenen, elektrischen Scheibenwischermotor ein mehrstufiges Stirnradgetriebe nachgeordnet, dessen Abtriebsrad exzentrisch mit einer Zahnstange verbunden ist, die mit einem Ritzel einer Abtriebswelle in Eingriff steht und über die die Abtriebswelle pendelnd angetrieben wird, wobei sich, analog zum Pleuel eines Kurbeltriebes, die Lage der Zahnstangenachse, und damit die Erstreckungsrichtung der Zahnstange hubabhängig verändert.

Eine Antriebsanodnung der eingangs genannten Art ist aus der US 5,969,431 A bekannt, bei der eine in ihrer Antriebsrichtung umkehrbare, gemeinsame motorische Antriebsquelle für den Antrieb eines schwenkbaren Fahrzeugscheibenwischers und eines zusätzlich hierzu vorgesehenen mechanischen Stellantriebes vorgesehen ist. In der Verbindung der durch einen Stellmagneten gebildeten Antriebsquelle zum Fahrzeugscheibenwischer ist ein einen Zahnstangentrieb umfassendes Getriebe angeordnet, dessen linear in Stellrichtung des Stellmagneten verschiebbar geführte Zahnstange in ihrem außerhalb ihres dem Antrieb des Fahrzeugscheibenwischers dienenden Hubbereiches liegenden Hubbereich einen vom Antrieb des Scheibenwischers abgekoppelten, unabhängigen mechanischen Stellantrieb bildet. Bei der Heckscheibe einer Heckklappe als schwenkbarer Heckscheibenwischer zugeordnetem Scheibenwischer ist über den Stellantrieb die Verriegelung der Heckklappe zu betätigen, was eine entsprechende lagemäßige Zuordnung oder entsprechende mechanische Umlenkungen bedingt.

Der Erfindung liegt die Aufgabe zugrunde, eine Antriebsanordnung der eingangs genannten Art im Hinblick auf erweiterte Einsatzmöglichkeiten auszubilden.

Erreicht wird dies mit den Merkmalen des Anspruches 1, demzufolge der vom Antrieb des Scheibenwischers entkoppelte, unabhängige Hubbereich der Zahnstange unter Vermittlung eines hydraulischen Stellantriebes genutzt wird, der einen Geberzylinder und einen Nehmerzylinder umfasst und bei dem die Zahnstange das Antriebselement für einen Kolben des Geberzylinders bildet, sodass weitgehende Variationsmöglichkeiten in der Wahl der Übersetzung im Antrieb zwischen der Zahnstange und der Antriebswelle des Scheibenwischers einerseits und des Stellantriebes andererseits gegeben sind und für den Antrieb des Scheibenwischers auch mit verhältnismäßig kleinen Hubwegen der Zahnstange gearbeitet werden kann, sodass sich kleine Bauvolumina ergeben. Die Nutzung der Zahnstange als Antriebselement für den Kolben des hydraulischen Stellantriebes bietet die Möglichkeit, auch bei solchen kleinen Bauvolumina und entsprechend kleinen Stellwegen der Zahnstange verhältnismäßig große Stellkräfte aufzubringen oder große Stellwege zu realisieren.

Besonders vorteilhaft ist es in diesem Zusammenhang, als Antriebsquelle einen in seiner Drehrichtung umkehrbaren Elektromotor zu verwenden, der ebenfalls bei entsprechender Wahl des Übersetzungsverhältnisses klein bauend ausgeführt werden kann, insbesondere mit der Führung der Zahnstange auch zu einer baulichen Einheit zusammengefasst werden kann.

Durch die im Rahmen der Erfindung unabhängige Nutzung der Antriebsanordnung für den Scheibenwischerantrieb und weitere Stellantriebe erweist sich eine kraftfrei zu betreibende Antriebsverbindung zum jeweiligen Stellantrieb, insbesondere eine lösbare Antriebsverbindung, als zweckmäßig, um Antriebsverluste zu vermeiden, wobei sich die Antriebsverbindung insbesondere für zum Antrieb des Scheibenwischers, so beispielsweise zum Antrieb des Heckscheibenwischers und zu diesem benachbarter Elemente, wie einem Heckdeckel, einem Kofferraumdeckel, benachbarter Dachteile oder dergleichen aufgrund kurzer Verbindungswege besonders eignet.

Weitere Einzelheiten und Merkmale der Erfindung ergeben sich aus den Ansprüchen. Ferner wird die Erfindung mit weiteren Details nachfolgend anhand eines Ausführungsbeispieles erläutert. Es zeigen:
- Fig. 1: in stark schematisierter Darstellung die Heckklappe eines Fahrzeuges mit der Heckklappe zugeordneter Heckscheibe sowie einem schwenkbaren Heckscheibenwi- scher, für dessen Antrieb eine Antriebsanordnung vor- gesehen ist, über die auch ein Stellantrieb für die Heckklappe zu beaufschlagen ist,
- Fig. 2: eine vergrößerte Darstellung des Ausschnittes II in Fig. 1, und
- Fig. 3 und 4: den Fig. 1 und 2 entsprechende Darstellungen mit ei- ner abgewandelten, im Leerlauf praktisch kraftfrei mitlaufend antreibbaren Ausführung der Hydraulik des Stellantriebes.

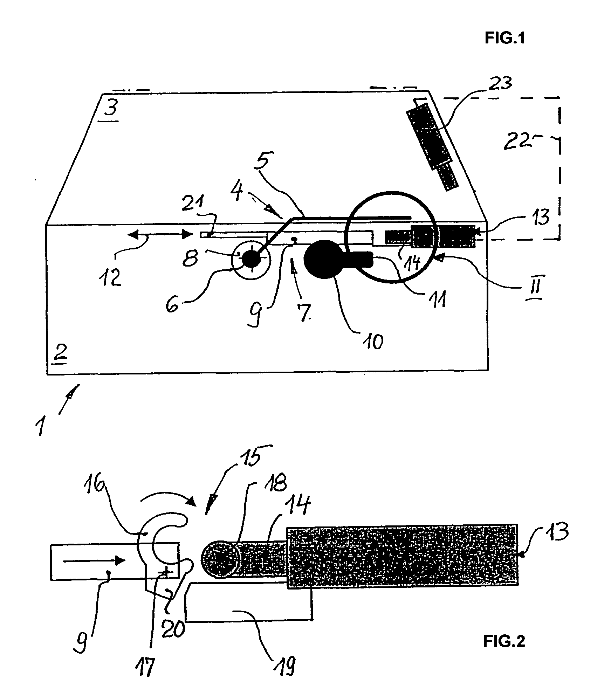

In der Schemadarstellung gemäß Fig. 1 ist mit 1 die Heckklappe eines nicht weiter dargestellten Fahrzeuges gezeigt, die eine aufrechte Schließstellung und eine nach hinten oben aufgeschwenkte Öffnungsstellung aufweist, wofür die Heckklappe 1 im Bereich ihrer Oberkante, wie schematisch strichpunktiert angedeutet, scharnierend am Fahrzeug angeschlagen sein kann. Die Heckklappe 1 weist einen unteren, geschlossenen Teil 2 und darüber liegend eine Heckscheibe 3 auf, der ein Heckscheibenwischer 4 zugeordnet ist, dessen Wischarm 5 auf einer Wischerwelle 6 sitzt. Die zugehörige Antriebsanordnung 7 ist symbolisch angedeutet und umfasst ein zur Wischerwelle 6 konzentrisches Antriebsrad 8 als Bestandteil eines Zahnstangentriebes mit einer Zahnstange 9, die mit dem Abtriebsritzel 10 eines Elektromotores 11 kämmt. Die Zahnstange 9 ist bezüglich ihrer Hubachse, was nicht gezeigt ist, lagefest angeordnet und, wie über den Pfeil 12 veranschaulicht, hubbeweglich, wozu im Ausführungsbeispiel der als Antriebsquelle vorgesehene Elektromotor 11 in seiner Drehrichtung umkehrbar ist.

In Verlängerung der Zahnstange 9, und im Ausführungsbeispiel achsgleich zu dieser, liegt ein Hydraulikzylinder 13 mit einer Kolbenstange bzw. einem Kolben 14, wobei Fig. 2 in Ergänzung zu Fig. 1 eine mechanische Kupplungsverbindung 15 zwischen dem Kolben 14 und der Zahnstange 9 veranschaulicht, und zwar im entkuppelten Zustand. Die Kupplungsverbindung 15 ist im Ausführungsbeispiel durch eine Drehklaue 16 gebildet, welche an der Zahnstange 9 um eine Achse 17 schwenkbar angeordnet ist und der am freien Ende der Kolbenstange 14 einen Zapfen 18 als Gegenelement zugeordnet ist. Im Hubbereich der Kolbenstange 14 ist diese überlagert zu einer Kippführung 19 angeordnet, die im Schwenkweg eines der Drehklaue 16 zugeordneten Ansatzes 20 liegt, derart, dass beim Auffahren der Zahnstange 9 gegen die Kolbenstange 14 die Drehklaue 16 in ihre Übergriffslage zum Zapfen 18 verschwenkt wird und dadurch die Zahnstange 9 mit der Kolbenstange 14 verkuppelt, wobei die eine Auflaufbahn für den Ansatz 20 bildende Kippführung 19 sich über den außerhalb des Eingriffes der Zahnstange 9 zum Antriebsrad 8 liegenden, und damit über den zum Heckscheibenwischer 4 entkuppelten Hubbereich der Zahnstange 9 erstreckt.

Fig. 1 veranschaulicht, dass die Zahnstange 9 in die verkuppelte Lage zur Kolbenstange 14 erst einfährt, wenn die Eingriffslage zum Antriebsrad 8 verlassen ist, bzw. dass die Kupplungsverbindung 15 gelöst ist, wenn die Zahnstange 9 in Antriebsverbindung zum Antriebsrad 8 liegt. Für die Drehklaue 16 bildet die Öffnungslage die Ausgangs- bzw. Normallage, sei es aufgrund der Gewichtsverhältnisse oder auch durch entsprechende Vorspannung, zum Beispiel über eine nicht dargestellte Feder.

In Verlängerung der Zahnstange 9 ist diese an ihrem zum Hydraulikzylinder 13 gegenüberliegenden Ende mit einem Führungsfortsatz 21 versehen, der die erforderliche Abstützung und Ausrichtung gewährleistet, wobei die dem Führungsfortsatz 21 zugeordnete Gegenführung nicht dargestellt ist.

Entsprechend dem Eingriff der Zahnstange 9 zum Antriebsrad 8 oder der Verkupplung der Zahnstange 9 zur Kolbenstange 14 dient die Antriebsanordnung 7 dem Antrieb des Scheibenwischers 4 oder der Beaufschlagung des Hydraulikzylinders 13, der im Ausführungsbeispiel die Funktion eines Geberzylinders hat, welcher über eine schematisch strichliert angedeutete Leitungsverbindung 22 mit einem Nehmerzylinder 23 verbunden ist, der einem Stellantrieb zum Öffnen und Schließen der Heckklappe 1 zugeordnet ist. Hierbei kann die Abstützung des Nehmerzylinders 23, was nicht gezeigt ist, unmittelbar zwischen Fahrzeugkarosserie und Heckklappe 1 erfolgen, oder es kann über den Nehmerzylinder 23 auch eine entsprechende Gestänge- oder Getriebeverbindung beaufschlagt werden.

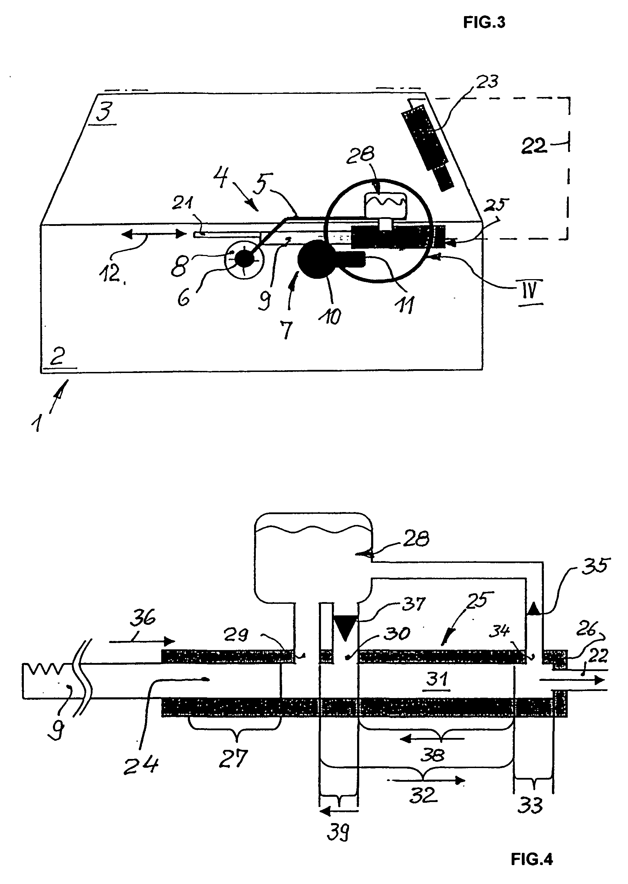

In den Darstellungen gemäß Fig. 1 und 2 ist eine mechanische Kupplungsverbindung 15 vorgesehen, im Ausführungsbeispiel gemäß Fig. 3 und 4 ist eine diesbezügliche hydraulische Lösung veranschaulicht, bei der die Zahnstange 9 im zylinderseitigen Endbereich einen Kolben 24 bildet und der als Geberzylinder 25 vorgesehene Hydraulikzylinder bei Antrieb des Scheibenwischers 4 dadurch quasi ohne Leistungsaufnahme betrieben werden kann, solange das über den Kolben 24 und den Zylindermantel 26 begrenzte Zylindervolumen 31 in offener Verbindung zu einem Ausgleichsbehälter 28 steht. Der Kolben 24 bewegt sich in dieser Arbeitsphase - Antrieb des Scheibenwischers 4 - innerhalb des Hubbereiches 27, und das durch den Kolben 24 innerhalb des Zylindermantels 26 abgegrenzte Zylindervolumen 31 steht innerhalb eines Übergangsbereiches über den Anschlussquerschnitt 29 mit dem Ausgleichsbehälter 28 und über die Leitung 22 mit dem Nehmerzylinder 23 in Verbindung, wobei Hubbewegungen des Kolbens 24 innerhalb des Hubbereiches 27 praktisch keinen Druckaufbau im Nehmerzylinder 23 zur Folge haben, da über den Ausgleichsbehälter 28 ein entsprechender Volumenausgleich für die durch die Bewegungen des Kolbens 24 innerhalb des Hubbereiches 27 bedingten Volumenänderungen erfolgt.

Der Hubbereich 27 entspricht dem Bewegungsbereich der Zahnstange 9, in dem der Scheibenwischer 4 angetrieben wird, und zwar schwenkbeweglich bevorzugt bei Wechsel der Schwenkrichtung durch Umkehrung der Drehrichtung des Motores 10.

Wird der Kolben 24 - nach Entkuppeln der Zahnstange 9 zum Antriebsrad 8 - weiter in den Geberzylinder 25 eingefahren, so ergibt sich nach Absteuerung des Anschlussquerschnittes 29 durch den Kolben 24 - des Weiteren zunächst einen bis auf den Anschluss der Leitung 22 geschlossenen Zylindermantel 26 unterstellend - über dem Hubbereich 32 ein Druckaufbau mit entsprechender Druckbeaufschlagung des Nehmerzylinders 23 zum Anheben der Heckklappe 1. Der Hubbereich 32 erstreckt sich bis nahe an das dem Kolben 24 gegenüberliegende Ende des Geberzylinders 25, und es verbleibt ein Hubbereich 33 zum Abgleich von Toleranzen.

Für das Absenken der Heckklappe 1, also deren Überführung aus der Öffnungstellung in die Schließstellung steht grundsätzlich ein dem Hubbereich 32 entsprechender Hubweg zur Verfügung, so dass bei entsprechender Umkehr der Bewegungsrichtung des Kolbens 24, beispielsweise durch Umsteuern des Motores 11, die Heckklappe 1 in ihre Schließstellung abgesenkt werden kann.

Ergibt sich beim Absenken der Heckklappe 1, beispielsweise durch ein vorstehendes Gepäckstück oder dergleichen, eine Situation, durch die die Heckklappe 1 in einer Zwischenstellung festgehalten wird, so führt dies bei fortlaufend gegebenem Antrieb der Zahnstange 9 bzw. des Kolbens 24 in der Schließstellung der Heckklappe 1 entsprechender Richtung zu einer Unterdruckbildung, solange kein Volumenausgleich über den Ausgleichsbehälter 28 erfolgen kann. Um diesen zu gewährleisten, und damit zur Realisierung eines Einklemmschutzes, ist in Ausgestaltung der Erfindung in Überdeckung zum Hubbereich 33 der Zylindermantel 26 mit einem weiteren Anschlussquerschnitt 34 versehen, der in Leitungsverbindung zum Ausgleichsbehälter 28 steht und in dem ein in Richtung auf den Ausgleichsbehälter 28 sperrendes Rückschlagventil 35 angeordnet ist, so dass beim Öffnen der Heckklappe 1 der hierfür erforderliche Druckaufbau nicht beeinträchtigt wird.

Des Weiteren liegt es im Rahmen der Erfindung, die durch den motorischen Antrieb für die Zahnstange 9 bzw. den Kolben 24 gesteuerte Schließbewegung der Heckklappe 1 in einem in der Größe vorgegebenen, an die Schließstellung angrenzenden Bereich dadurch von der Hubstellung des Kolbens 24 zu entkoppeln, dass, bezogen auf die der Öffnungsrichtung der Heckklappe 1 entsprechende Stellrichtung 36 des Kolbens 24, in Stellrichtung 36 nachfolgend auf den Anschlussquerschnitt 29 ein Anschlussquerschnitt 30 zum Ausgleichsbehälter 28 vorgesehen wird, indem in Richtung auf das Zylindervolumen 31 sperrend ein angesteuertes Ventil 37, insbesondere ein elektrisch angesteuertes Rückschlagventil 37 angeordnet ist. Wird beim Absenken der Heckklappe 1 in ihre Schließstellung der Anschlussquerschnitt 30 aufgesteuert, so erfolgt über das entsprechend angesteuerte Ventil 37 ein Druckabbau in Richtung auf den Ausgleichsbehälter 28 und es kann die Heckklappe 1 im Wesentlichen ungebremst in ihre Schließstellung fallen, womit selbsttätig eine Verrastung z. B. gegen die Karosserie erreicht werden kann, wobei mit einfachen Passivverschlüssen gearbeitet werden kann. Der entsprechende Fallweg ist in Fig. 4 durch den Hubbereich 39 veranschaulicht, der auf den Hubbereich 38 folgt, indem die Schließbewegung der Heckklappe 1 über die Bewegung des Kolbens 24 gesteuert erfolgt.

Eine Ausgestaltung gemäß Fig. 3 und 4 führt zu einer besonders einfachen Gesamtlösung, die zudem auch hohe Betriebssicherheit aufweist, da innere Leckagen der Hydraulik durch den Ausgleichsbehälter 28 egalisiert werden können und da zudem nur eine Hydraulikleitung 22 erforderlich ist. Ferner lässt sich so in besonders einfacher Weise auch ein Einklemmschutz realisieren, ungeachtet der möglichen selbsttätigen Verriegelung bei Verwendung einfacher Schlosskonstruktionen.

Wird in der Ausgestaltung gemäß Fig. 1 und 2 analog zu Fig. 3 und 4 ein Hydraulikzylinder mit zugeordnetem Ausgleichsbehälter verwendet, so lassen sich selbstverständlich auch in Verbindung mit einer mechanischen Kupplungsverbindung die vorstehend in Bezug auf die Fig. 3 und 4 erläuterten Zusatzeffekte (Einklemmschutz, selbsttätige Verriegelung) erreichen.

## Patentansprüche

1. Antriebsanordnung für einen schwenkbaren Fahrzeugscheibenwischer (4) mit einer in ihrer Antriebsrichtung umkehrbaren, motorischen Antriebsquelle und in deren Verbindung zum Fahrzeugscheibenwischer (4) liegendem, einen Zahnstangentrieb umfassenden Getriebe, dessen Zahnstange (9) bezüglich ihrer Achse lagefest angeordnet ist und in einem außerhalb ihres zum Scheibenwischer (4) verkuppelten Hubbereiches (27) liegenden Hubbereich ein vom Antrieb des Scheibenwischers (4) unabhängiges Antriebselement für einen zusätzlich zum Antrieb des Scheibenwischers (4) vorgesehenen Stellantrieb bildet,
**dadurch gekennzeichnet,**
**dass** der Stellantrieb als hydraulischer Stellantrieb ausgebildet ist, der einen Geberzylinder (13; 25) und einen Nehmerzylinder (23) umfasst und dass die Zahnstange (9) das Antriebselement für einen Kolben (14; 24) des Geberzylinders (13; 25) bildet.

2. Antriebsanordnung nach Anspruch 1,
**dadurch gekennzeichnet,**
**dass** die Antriebsquelle als in der Drehrichtung umkehrbarer Elektromotor (11) ausgebildet ist.

3. Antriebsanordnung nach Anspruch 1 oder 2,
**dadurch gekennzeichnet,**
**dass** der Geberzylinder (25) mit einem Ausgleichsbehälter (28) verbunden ist, der in seiner Verbindung zum Zylindervolumen (31) des Geberzylinders (25) absteuerbar ist.

4. Antriebsanordnung nach Anspruch 3,
**dadurch gekennzeichnet,**
**dass** der Fahrzeugscheibenwischer (4) einer Heckscheibe (3) einer über den Stellantrieb verschwenkbaren Heckklappe (1) zugeordnet ist und dass beim Schließen der Heckklappe (1) eine Saugverbindung des durch den Kolben begrenzten Zylindervolumens (31) gegen den Ausgleichsbehälter (28) gegeben ist.

5. Antriebsanordnung nach Anspruch 4,
**dadurch gekennzeichnet,**
**dass** die Saugverbindung einen Anschlussquerschnitt (34) zum Zylindervolumen (31) umfasst, der im Endbereich des Förderhubes des Geberzylinders (25) liegt.

6. Antriebsanordnung nach Anspruch 5,
**dadurch gekennzeichnet,**
**dass** der Anschlussquerschnitt (34) einem vom Kolben (24) nicht übersteuerten Überhubbereich des Geberzylinders (25) zugeordnet ist.

7. Antriebsanordnung nach einem der Ansprüche 3 bis 6,
**dadurch gekennzeichnet,**
**dass** der Geberzylinder (25) im Hubbereich zur Beaufschlagung des Nehmerzylinders (23) eine beim Schließen der Heckklappe (1) auf das Zylindervolumen (31) öffnende Verbindung aufweist.

8. Antriebsanordnung nach Anspruch 7,
**dadurch gekennzeichnet,**
**dass** die auf das Zylindervolumen (31) sich öffnende Verbindung einen Anschlussquerschnitt (30) zum Zylindervolumen (31) umfasst, der zu einem auf den dem Scheibenwischerantrieb zugeordneten Hubbereich (27) folgenden Übergangsbereich benachbart liegt.

9. Antriebsanordnung nach Anspruch 7 oder 8,
**dadurch gekennzeichnet,**
**dass** in der auf das Zylindervolumen (31) sich öffnenden Verbindung ein gesteuertes, in Gegenrichtung sperrendes Ventil (37) angeordnet ist.

10. Antriebsanordnung nach Anspruch 1 oder 2,
**dadurch gekennzeichnet,**
**dass** der Kolben (14) des Stellantriebes mit der Zahnstange (9) lösbar verbunden ist.

11. Antriebsanordnung nach Anspruch 1 oder 2,
**dadurch gekennzeichnet,**
**dass** die Zahnstange (9) den Kolben (24) des Geberzylinders (25) bildet.

## Claims

1. Drive system for a pivotable vehicle windscreen wiper (4) having a motorized drive source which can be reversed in its driving direction and a mechanism which is situated in the connection of the said drive source to the vehicle windscreen wiper (4), comprises a rack and pinion drive and the rack (9) of which is arranged in a fixed position with respect to its axis and, in a stroke region situated outside its stroke region (27) that is coupled to the windscreen wiper (4), forms a drive element which is independent of the drive of the windscreen wiper (4) and is intended for an actuating drive provided in addition to the drive of the windscreen wiper (4), **characterized in that** the actuating drive is designed as a hydraulic actuating drive which comprises a master cylinder (13; 25) and a slave cylinder (23), and **in that** the rack (9) forms the drive element for a piston (14; 24) of the master cylinder (13; 25).

2. Drive system according to Claim 1, **characterized in that** the drive source is designed as an electric motor (11) which can be reversed in the direction of rotation.

3. Drive system according to Claim 1 or 2, **characterized in that** the master cylinder (25) is connected to an equalizing tank (28), the connection of which to the cylinder volume (31) of the master cylinder (25) can be shut off.

4. Drive system according to Claim 3, **characterized in that** the vehicle windscreen wiper (4) of a rear window (3) is assigned to a tailgate (1) which can be pivoted via the actuating drive, and **in that**, when the tailgate (1) is closed, a suction connection of the cylinder volume (31), which is delimited by the piston, towards the equalizing tank (28) is provided.

5. Drive system according to Claim 4, **characterized in that** the suction connection comprises a connecting cross section (34) to the cylinder volume (31), which connecting cross section is situated in the end region of the delivery stroke of the master cylinder (25).

6. Drive system according to Claim 5, **characterized in that** the connecting cross section (34) is assigned to an overstroke region of the master cylinder (25) not overdriven by the piston (24).

7. Drive system according to one of Claims 3 to 6, **characterized in that**, in the stroke region, the master cylinder (25) has, for acting upon the slave cylinder (23), a connection opening onto the cylinder volume (31) when the tailgate (1) is closed.

8. Drive system according to Claim 7, **characterized in that** the connection opening onto the cylinder volume (31) comprises a connecting cross section (30) to the cylinder volume (31), which connecting cross section is adjacent to a transition region following the stroke region (27) assigned to the windscreen wiper drive.

9. Drive system according to Claim 7 or 8, **characterized in that** a controlled valve (37) which locks in the opposite direction is arranged in the connection opening onto the cylinder volume (31).

10. Drive system according to Claim 1 or 2, **characterized in that** the piston (14) of the actuating drive is connected releasably to the rack (9).

11. Drive system according to Claim 1 or 2, **characterized in that** the rack (9) forms the piston (24) of the master cylinder (25).

## Revendications

1. Système d'entraînement pour un essuie-glace de véhicule pivotant (4) avec une source d'entraînement motrice réversible et, dans la liaison de cette dernière avec l'essuie-glace de véhicule (4), un train d'engrenages comprenant un engrenage de crémaillère, dont la crémaillère (9) est agencée de manière fixe par rapport à son axe et forme sur un secteur de course situé à l'extérieur de son secteur de course (27) accouplé à l'essuie-glace (4) un élément de commande indépendant du moteur de l'essuie-glace (4) pour un mécanisme de commande mécanique prévu en plus du moteur de l'essuie-glace (4),
**caractérisé en ce que**
le mécanisme de commande est configuré comme un mécanisme de commande hydraulique qui comprend un cylindre émetteur (13; 25) et un cylindre récepteur (23) et **en ce que** la crémaillère (9) constitue l'élément d'entraînement d'un piston (14; 24) du cylindre émetteur (13; 25).

2. Système d'entraînement selon la revendication 1,
**caractérisé en ce que**
la source d'entraînement est configurée comme un moteur électrique réversible (11).

3. Système d'entraînement selon la revendication 1 ou 2,
**caractérisé en ce que**
le cylindre émetteur (25) est relié avec un réservoir de compensation (28) dont la liaison avec le volume de cylindre (31) du cylindre émetteur (25) peut être fermée.

4. Système d'entraînement selon la revendication 3,
**caractérisé en ce que**
l'essuie-glace de véhicule (4) d'une lunette arrière (3) est associé par le mécanisme de commande à un hayon pivotant (1) et **en ce que**, lors de la fermeture du hayon (1), une liaison d'aspiration du volume de cylindre (31) délimité par le piston est créée par rapport au réservoir de compensation (28).

5. Système d'entraînement selon la revendication 4,
**caractérisé en ce que**
la liaison d'aspiration comprend un segment de raccordement (34) avec le volume de cylindre (31) qui se trouve dans la zone terminale de la course de refoulement du cylindre émetteur (25).

6. Système d'entraînement selon la revendication 5,
**caractérisé en ce que**
le segment de raccordement (34) est associé à un secteur de dépassement de course du cylindre émetteur (25) non surrégulé par le piston (24).

7. Système d'entraînement selon l'une quelconque des revendications 3 à 6,
**caractérisé en ce que**
le cylindre émetteur (25) présente dans le secteur de course pour l'alimentation du cylindre récepteur (23) une liaison s'ouvrant sur le volume de cylindre (31) lors de la fermeture du hayon (1).

8. Système d'entraînement selon la revendication 7,
**caractérisé en ce que**
la liaison s'ouvrant sur le volume de cylindre (31) comprend un segment de raccordement (30) avec le volume de cylindre (31) qui est voisin d'une zone de transition suivant le secteur de course (27) associé au moteur d'essuie-glace.

9. Système d'entraînement selon la revendication 7 ou 8,
**caractérisé en ce que**
dans la liaison s'ouvrant sur le volume de cylindre (31) est agencée une soupape commandée (37) bloquant en sens inverse.

10. Système d'entraînement selon la revendication 1 ou 2,
**caractérisé en ce que**
le piston (14) du mécanisme de commande est relié de manière détachable avec la crémaillère (9).

11. Système d'entraînement selon la revendication 1 ou 2,
**caractérisé en ce que**
la crémaillère (9) constitue le piston (24) du cylindre émetteur (25).
